# EUROPÄISCHE PATENTANMELDUNG

(11) **EP 2 390 978 A1**
(43) Veröffentlichungstag der Anmeldung: **30.11.2011**
(21) Anmeldenummer: 10163913.6
(22) Anmeldetag: 26.05.2010
(51) Int. Cl.: H02G 5/10

(54) **Hochspannungs-schaltanlagensegment**

(71) Anmelder: ABB Technology AG, 8050 Zürich (CH)
(72) Erfinder: Saxl, David, CH-8046, Zürich (CH); Kallweit, Rene, CH-8200, Schaffhausen (CH)
(74) Vertreter: ABB Patent Attorneys

(57) **Zusammenfassung**

Schaltanlagensegment 1 c mit mindestens einer elektrischen Phase, wobei jede Phase ihrerseits einen Stromleiter 3c aufweist. Der Stromleiter 3c ist mittels eines Isoliergases 8 in einem metallgekapselten Gehäuse 7 des Schaltanlagensegments elektrisch isoliert angeordnet. Der Stromleiter 3c umfasst mindestens einen Leiterabschnitt, welcher sich in einer quer zur Wirkrichtung der Erdanziehungskraft 10 erstreckenden Längsrichtung erstreckt. Weiter weist der Stromleiter 3c in Längsrichtung gesehen einen rohrförmigen Grundquerschnitt auf. Im mindestens einen Längsabschnitt ist mindestens ein Kanal 13 angeordnet, welcher Kanal 13 den Stromleiter 3c bezüglich der Längsrichtung von einem Eintrittsbereich 14 zu einem Austrittsbereich 15 führend quer durchdringt. Der mindestens eine Kanal 13 ist dabei derart ausgebildet und im Stromleiter 3c angeordnet, dass sich im Nominalbetrieb des Schaltanlagensegments 1c selbsttätig eine durch den Kanal führende Konvektionsströmung 17b des Isoliergases 8 mit einer bezüglich der Wirkrichtung der Erdanziehungskraft 10 entgegengesetzten Richtungskomponente einstellt.

## Beschreibung

### TECHNISCHES GEBIET

Die Erfindung bezieht sich auf das Gebiet von gasisolierten Hochspannungsschaltanlagen mit mindestens einer elektrischen Phase, wobei jede Phase einen Stromleiter aufweist, welcher mittels eines Isoliergases in einem metallgekapselten Gehäuse des Schaltanlagensegments elektrisch isoliert angeordnet ist.

### STAND DER TECHNIK

Im Betrieb entstehen führen ohmsche Verluste des Stromleiters selber sowie Anschlussverluste zu einer Erwärmung des Stromleiters. Da der Stromleiter mittels eines geeigneten Isoliergases, beispielsweise SF₆ (Schwefelhexafluorid), gegen das Gehäuse seines Sammelschienenabschnitts elektrisch isoliert ist, ist eine Wärmeabgabe vom Stromleiter an das Gehäuse seines Sammelschienenabschnitts oft stark eingeschränkt. Aus dem Stand der Technik sind mehrere Konzepte bekannt, welche sich mit einer verbesserten Wärmeabfuhr von Wärme aus dem Stromleiter befassen.

Aus der EP0115089A1 ist ein erstes Konzept bekannt, bei welchem ein in einem isoliergasgefüllten Gehäuse angeordneter Leiter mittels einer ausserhalb des Gehäuses angeordneten Kühlanlage in Form einer Gasverflüssigungsanlage verbunden ist. Im Betrieb der Anlage wird gekühltes Gas über ein Rohr ins Innere des holzylinderförmigen Leiters eingeführt. Von dort gelangt das Gas über Durchtrittsöffnungen im Leiter zu einem gehäuseseitigen Auslass. Dieser Auslass führt das erwärmte Gas anschliessend zurück zur Kühlanlage.

Eine derartige Kühlung des Stromleiters ist zwar wirkungsvoll, erfordert jedoch einen verhältnismässig hohen konstruktiven Aufwand.

Gemäss einem zweiten Konzept, beispielsweise gemäss der JP 053-047535U oder der DE 2016957 A, wird der Stromleiters als ein Bündel von mehreren Teilleitern geführt, um die mit dem Isoliergas in berührendem Kontakt stehende Gesamtoberfläche des Stromleiters gegenüber einem einzigen Stromleiter zu vergrössern.

Obwohl das zweite Konzept hinsichtlich dessen Wirksamkeit zumindest theoretisch durchaus funktionsfähig ist, verursacht seine Umsetzung in die Praxis dennoch einen erheblichen konstruktiven Aufwand. Dieser widerspiegelt sich in den verhältnismässig komplexen Lösungen, welche erforderlich sind, um die Teilleiter endseitig elektrisch wieder zusammenzufassen, um sie an einem Anschlussstück, etwa in Form einer Armatur eines Isolators, befestigen zu können.

### DARSTELLUNG DER ERFINDUNG

Die Aufgabe der Erfindung besteht daher darin, ein Hochspannungs-Schaltanlagensegment, beispielsweise ein Hochspannungs-Schaltanlagensegment einer gasisolierte Schaltanlage und eine Solche vorzulegen, dessen Stromleiter eine verhältnismässig geringe Komplexität und im Vergleich zu einem röhrenförmigen Stromleiter dennoch eine verbesserte Wärmeabfuhr der Wärme vom Stromleiter weg ermöglicht. Unter dem Begriff Hochspannung wird eine Nominalspannung von mindestens 50kV verstanden. Besonders effektiv wird die vorliegende Erfindung im Zusammenhang mit Höchstspannungsanlagen, wobei unter Höchstspannung eine Nominalspannung um die 1000kV verstanden wird.

Eine weitere Aufgabe besteht darin, ein Verfahren zur Kühlung mindestens eines Stromleiters einer gasisolierten Hochspannungs-Schaltanlagensegments mit mindestens einer elektrischen Phase vorzulegen, wobei die Phase einen Stromleiter aufweist.

Die Erfindungsidee beider Aufgaben besteht darin, bei einem sich weitestgehend horizontal erstreckenden Abschnitt der gasisolierten Schaltanlage im Betrieb den natürlichen Temperaturunterschied des Isoliergases im entsprechenden Gehäuseabschnitt gezielt zur Kühlung des Stromleiters einzusetzen. Messungen haben gezeigt, dass sich - in Richtung der Wirkrichtung der Erdanziehungskraft gesehen - in einer unteren Hälfte des Gehäuseabschnitts ein Kaltgassee befindet, dessen Temperatur kleiner ist als die Temperatur des restlichen Isoliergases im Gehäuse. Bildlich ausgedrückt wird der Kaltgassee nun hydraulisch derart angezapft, dass dessen kühles Gas zur Übertragung von Wärme des Stromleiters an das Gehäuse einsetzbar ist. Die sich zumindest beim Nominalbetrieb des Schaltanlagensegments gezielt eingesetzte, selbsttätig einstellende Konvektionskühlung führt dabei zu einer Kühlung des Stromleiters, ohne dass dabei eine zusätzliche spezielle Pumpeinrichtung erforderlich wird.

Hinsichtlich des Hochspannungs-Schaltanlagensegment wird diese Aufgabe dadurch gelöst, dass das Schaltanlagensegment mindestens eine elektrische Phase aufweist, wobei jede Phase ihrerseits einen Stromleiter aufweist. Der Stromleiter ist mittels eines Isoliergases in einem metallgekapselten Gehäuse des Schaltanlagensegments elektrisch isoliert angeordnet. Der Stromleiter umfasst mindestens einen Leiterabschnitt, welcher sich in einer quer zur Wirkrichtung der Erdanziehungskraft erstreckenden Längsrichtung erstreckt. Weiter weist der Stromleiter in Längsrichtung gesehen einen rohrförmigen Grundquerschnitt auf. Im mindestens einen Längsabschnitt ist mindestens ein Kanal angeordnet, welcher Kanal den Stromleiter bezüglich der Längsrichtung von einem Eintrittsbereich zu einem Austrittsbereich führend quer durchdringt. Der mindestens eine Kanal ist dabei derart ausgebildet und im Stromleiter angeordnet, dass sich im Nominalbetrieb des Schaltanlagensegments aufgrund des selbsttätig entstehenden Kamineffekts eine durch den Kanal führende Konvektionsströmung des Isoliergases mit einer bezüglich der Wirkrichtung der Erdanziehungskraft entgegengesetzten Richtungskomponente einstellt. Unter Ausbildung des Kanals wird beispielsweise die Kanalbreite und die sich quer zur Längsrichtung erstreckende Kanalquerschnittsform verstanden.

Ein technischer Effekt der erfindungsgemässen gasisolierten Schaltanlage liegt in einer Ausführungsform darin, dass der erfindungsgemässe Stromleiter bei gleichbleibendem Aussendurchmesser des Stromleiters und gleichbleibenden Gehäuseabmessungen der Schaltanlage beim Stromleiter eine Erhöhung der Strombelastbarkeit ermöglicht. Aus diesen Gründen eignet sich die vorliegende Erfindung insbesondere für Nachrüstungen/Retrofit-Projekte von gasisolierten Unterstationen und dergleichen. Je nach Anforderungen gehen Retrofit-Projekte oft mit einer Leistungserhöhung der gasisolierten Schaltanlage einher, so dass sich mit der Erfindung gleich zwei Anforderungen gemeinsam lösen lassen.

In einer anderen Ausführungsform erlaubt der erfindungsgemässe Aufbau des Stromleiters im Vergleich zu einem konventionellen röhrenförmigen Stromleiter für dieselbe Leistungsübertragung einen geringeren Aussendurchmesser des Stromleiters und -je nach Bedarf - eine Verringerung der erforderlichen Gehäuseabmessungen der Schaltanlage beim Stromleiter.

Ein weiterer Vorteil liegt darin, dass der rohrartige Stromleiter im Vergleich zu konventionellen Schienenpaketen mit mehreren Teilleitern, etwa in Form von Flachprofilen, eine geringere Gesamtmasse aufweist und insbesondere bei runden Grundquerschnitten des Stromleiters dielektrisch nahezu optimal gehalten werden kann.

Aufgrund des rohrförmigen Grundquerschnitts des Stromleiters weist der Kanal quer zur Längsrichtung demnach eine variierende Kanalbreite auf, wodurch die mit dem durch den Kanal führende Konvektionsströmung des Isoliergases in Berührung stehende Innenfläche des Stromleiters zumindest im Längsabschnitt maximiert ist. Dies führt gegenüber einem unperforierten rohrförmigen Stromleiter zu einer vergrösserten, thermisch effektiven Gesamtoberfläche, welche mit dem Isoliergas in Berührung steht.

Wenn der rohrförmige Stromleiter einen Grundprofilquerschnitt in Längsrichtung aufweist, welcher zwischen einem ersten Anschlussbereich und einem zweiten Anschlussbereich überwiegend konstant ist, beispielsweise ein stranggezogenes Aluminium- oder Kupferrohr in Leiterqualität, so ist eine besonders geringe Komplexität des Stromleiters besonders wirtschaftlich erzielbar ist.

In einer Basisausführungsform des erfindungsgemässen Schaltanlagensegments ist der Grundprofilquerschnitt des Stromleiters pro Phase kreisringförmig. Da derartige Grundprofilquerschnitte Standardprofile in der Elektroindustrie darstellen, lassen sich besonders wirtschaftlich Stromleiter gemäss der vorliegenden Erfindung daraus fertigen.

Je nach Ausführungsform und Anforderungen ist der rohrförmige Stromleiter aus Schalenelementen und zwei in Richtung der Längsachse gesehen stirnseitigen Endstücken aufgebaut, wobei die Endstücke beispielsweise dem ersten Anschlussbereich und den zweiten Anschlussbereich bilden. Je nach Ausführungsform des Stromleiters sind die röhrenförmigen Endstücke mittels Löten oder Schweissen stoffschlüssig mit den Schalenelementen verbunden.

Je nach Ausführungsform weist ein Schaltanlagensegment im Eintrittsbereich und im Austrittsbereich mindestens je eine Öffnung in Form eines Loches oder eines sich in Längsrichtung erstreckenden Schlitzes auf. Je nach Anforderungen und Gegebenheiten lassen sich beispielsweise die folgenden Kombinationen von Öffnungen realisieren.

| Art der Öffnung im Eintrittsbereich | Art der Öffnung im Austrittsbereich |
|---|---|
| Loch | Loch |
| Schlitz | Schlitz |
| Loch | Schlitz |
| Schlitz | Loch |
| Loch + Schlitz | Loch und/oder Schlitz |

Falls es die Anforderungen erfordern, kann das Loch im Lochquerschnitt ausser kreisrund auch eine andere Querschnittsform aufweisen, beispielsweise ellipsenförmig, dreieckig usw.

In einer Basisausführungsform des Stromleiters sind die zwei Öffnungen im Stromleiterquerschnitt gesehen und auf die Längsrichtung bezogen diagonal zueinander angeordnet.

Je nach Grösse des Kaltgassees kann ein zuverlässiges Ansaugen von kühlem Gas durch die Kaminwirkung dadurch sichergestellt werden, dass die mindestens eine Öffnung im Eintrittsbereich als Ansaugstutzen ausgebildet ist, welcher sich in Wirkrichtung der Erdanziehungskraft vom Stromleiter weg zum Gehäuse hin erstreckt. Anders ausgedrückt heisst dies: Je höher der Temperaturgradient zwischen Eintrittsbereich und Austrittsbereich ist, desto grösser ist ein Massenstrom des Gasstromes der Konvektionsströmung durch den mindestens einen Kanal. Je grösser der Massenstrom, desto besser/grösser ist die Kühlung des Stromleiters, da die Konvektionsströmung durch den mindestens einen Kanal mehr Wärme vom Stromleiter abzuführen vermag. Um den dielektrischen und elektrischen Anforderungen zu genügen, umfasst der Ansaugstutzen ein elektrisch nichtleitendes Material oder ist aus einem elektrisch nichtleitenden Material gefertigt, etwa aus Isoliermaterial aus Epoxydharz und geeigneten Füllstoffen. Je nach Anforderungen und Ausführungsform ist der Ansaugstutzen kraft- und/oder formschlüssig dauerhaft mit dem rohrförmigen Grundkörper des Stromleiters verbunden.

In einer Ausführungsform des Ansaugstutzens ist dieser rohrartig ausgebildet ist, so dass er die eintrittsseitige Öffnung jeweils lateral umschliesst.

Wenn der Ansaugstutzen kielartig ausgebildet ist, kann er sich je nach Ausführungsform in Längsrichtung entlang einer Öffnung oder entlang mehrerer Öffnungen erstrecken.

Eine besonders zuverlässige Versorgung der Konvektionsströmung im mindestens einen Kanal ist dadurch erreichbar, dass der mindestens eine Ansaugstutzen quer, beispielsweise radial, zur Längsrichtung gesehen eine Länge aufweist, welche Länge mehr als 50% eines Isolierabstandes dem Stromleiter und dem Gehäuse beträgt, so dass im Betrieb des Schaltanlagensegments 1d kühles Isolationsgas aus einem Ansaugbereich 18 innerhalb des Gehäuses 7 ansaugbar ist, wobei sich eine Eintrittsöffnung 17 des Ansaugstutzens 26a in Richtung der Erdanziehungskraft 10 gesehen näher beim Gehäuse als beim Stromleiter befindet.

Aus den oben genannten Schaltanlagensegmenten lässt sich beispielsweise eine Sammelschienenanordnung einer gasisolierten Schaltanlage bilden. In einer Basisvariante der gasisolierten Schaltanlage ist die Sammelschienenanordnung als einphasig gekapselte Sammelschienenanordnung ausgebildet.

Aufgrund des rohrförmigen Grundquerschnittes Stromleiter ist der Stromleiter bei dessen Montage beispielsweise in einfachster Weise lediglich über seine Innenfläche auf einen pinförmigen Anschlusskontakt aufsteckbar und mit diesem elektrisch kontaktierbar. Dies gilt insbesondere für kreisringförmige Grundquerschnitte des Stromleiters. Falls erforderlich sind Kontaktelemente, etwa in Form von Lamellen- oder Spiralkontaktelementen zur Verbesserung der Stromübergangsqualität zwischen dem Anschlusskontakt und dem Stromleiter einsetzbar. Diese Kontaktelemente können beispielsweise innwändig am Rohr oder umfangsseitig am Pin-förmigen Anschlusskontakt angeordnet sein.

Allen Ausführungsformen ist gemeinsam, dass sich die Öffnungen in Richtung der Längsachse nicht derart durchgängig erstrecken, etwa indem der Stromleiter in Längsrichtung derart durchgehend geschlitzt ist, dass der Stromleiter in mehrere schalenförmige Elemente zerfällt. Es ist aus Gründen der Stromübertragbarkeit vorteilhaft, wenn das rohrförmige Grundprofil des Stromleiters zumindest im Bereich der Kontaktelemente durchgängig (unperforiert) ist.

Ist eine positionstreue Halterung des Stromleiters relativ zum Anschlusskontakt erforderlich, beispielsweise im Fall von Ansaugstutzen, dann ist der Stromleiter formschlüssig (z.B. einer Nut-Keil-Kombination) und/oder kraftschlüssig (z.B. einer Stellschraube) derart in einer vorbestimmten Relativposition in Umfangsrichtung gegenüber seinem Anschlusskontakt fixierbar, so dass der Eintrittsbereich bezüglich der Wirkrichtung der Erdanziehungskraft im Betrieb der gasisolierten Schaltanlage positionstreu haltbar bleibt.

Hinsichtlich des Verfahrens zur Kühlung mindestens eines Stromleiters einer gasisolierten Hochspannungs-Schaltanlagensegments wird diese Aufgabe entsprechend den Angaben des Hochspannungs-Schaltanlagensegments gelöst. Daher gelten die bezüglich des Hochspannungs-Schaltanlagensegments angegebenen Vorteile gelten sinngemäss auch für das Verfahren zur Kühlung der Stromschiene.

### KURZE BESCHREIBUNG DER ZEICHNUNGEN

Nachfolgend werden mehrere Ausführungsformen der Erfindung anhand der Zeichnung detailliert erläutert. Hierbei zeigt rein schematisch
- FIG. 1: einen Ausschnitt einer ersten Ausführungsform eines Schaltanlagensegments in Form eines geraden Verbindungselements im Längsschnitt;
- FIG. 2: einen Querschnitt des Schaltanlagensegments von Figur 1 entlang der Schnittebene II-II mit stilisierter Angabe der Konvektionsströmung im Kanal;
- FIG. 3: eine dreidimensionale Ansicht des Stromleiters von Figur 1;
- FIG.4: einen Querschnitt einer zweiten Ausführungsform eines Schaltanlagensegments analog zu Figur 2;
- FIG.5: einen Querschnitt einer dritten Ausführungsform eines Schaltanlagensegments analog zu Figur 2;
- FIG.6: einen Querschnitt einer vierten Ausführungsform eines Schaltanlagensegments analog zu Figur 2, wobei der Stromleiter nun einen Ansaugstutzen aufweist;
- FIG. 7: eine dreidimensionale Ansicht des Stromleiters von Figur 6;
- FIG.8: einen Querschnitt einer fünften Ausführungsform eines Schaltanlagensegments analog zu Figur 6, wobei der Stromleiter nun zwei Ansaugstutzen aufweist;
- FIG.9: einen Querschnitt einer sechsten Ausführungsform eines Schaltanlagensegments analog zu Figur 6, wobei der Stromleiter einen trichterartigen Ansaugstutzen aufweist; und
- FIG. 10: einen Detailausschnitt der Zone A von Figur 1 mit einer siebten Ausführungsform eines Schaltanlagensegments.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen, wenn sie geometrisch und/oder funktionell identisch sind. Wenn sie zumindest ähnlich sind, so sind sie entsprechen mit Buchstaben indexiert. Die beschriebenen Ausführungsformen stehen beispielhaft für den Erfindungsgegenstand und haben keine beschränkende Wirkung. Für die nachfolgende Beschreibung sollen sich die Begriffe "obere", "untere", "linke", "rechts", "vorne", "horizontal", "vertikal" sowie Abwandlungen davon lediglich bezüglich den in den Figuren dargestellten Ausrichtungen der Gegenstände beziehen und deren Verständnis erleichtern. Die Klarheit der Figuren wird erreicht, indem auf eine Schraffur der Schnittflächen in den Schnittdarstellungen zugunsten der Übersichtlichkeit situativ verzichtet worden ist.

### WEG ZUR AUSFÜHRUNG DER ERFINDUNG

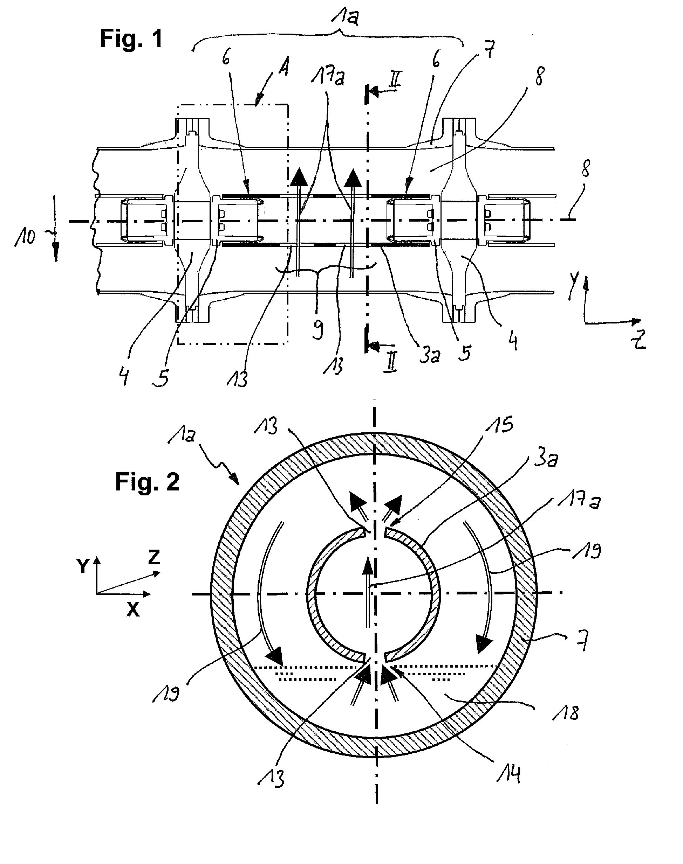

FIG. 1 zeigt einen Ausschnitt einer ersten Ausführungsform eines Schaltanlagensegments 1a in Form eines geraden Verbindungselements im Längsschnitt entlang einer sich in Längsrichtung Z erstreckenden Längsachse 2. Das Schaltanlagensegment 1a weist zur Nennstromübertragung einen rohrförmigen Stromleiter 3a auf. In Zusammenschau mit Figur 2 geht hervor, dass der Stromleiter 3a in Längsrichtung gesehen einen rohrförmigen Grundquerschnitt aufweist. Der sich zwischen zwei Isolatoren 4 erstreckende Stromleiter 3a ist endseitig jeweils auf Anschlusskontakt in Form eines pin-förmigen Kontaktträgers 5 aufgeschoben. Zwischen den Anschlusskontakten 5 und innwändig am rohrförmigen Stromleiter 3a sind Kontaktelemente, etwa in Form von Lamellen- oder Spiralkontaktelementen 6 zur Verbesserung der Stromübergangsqualität angeordnet.

Die elektrische Isolation des Stromleiter 3a bezüglich einem metallgekapselten Gehäuse 7 des Schaltanlagensegments 1a erfolgt über die Isolatoren 4 und ein im Betrieb des Schaltanlagensegments 1a zwischen Stromleiter 3a und Gehäuse 7 angeordneten, gasförmigen Isoliermittel 8, beispielsweise Schwefelhexafluorid oder dergleichen.

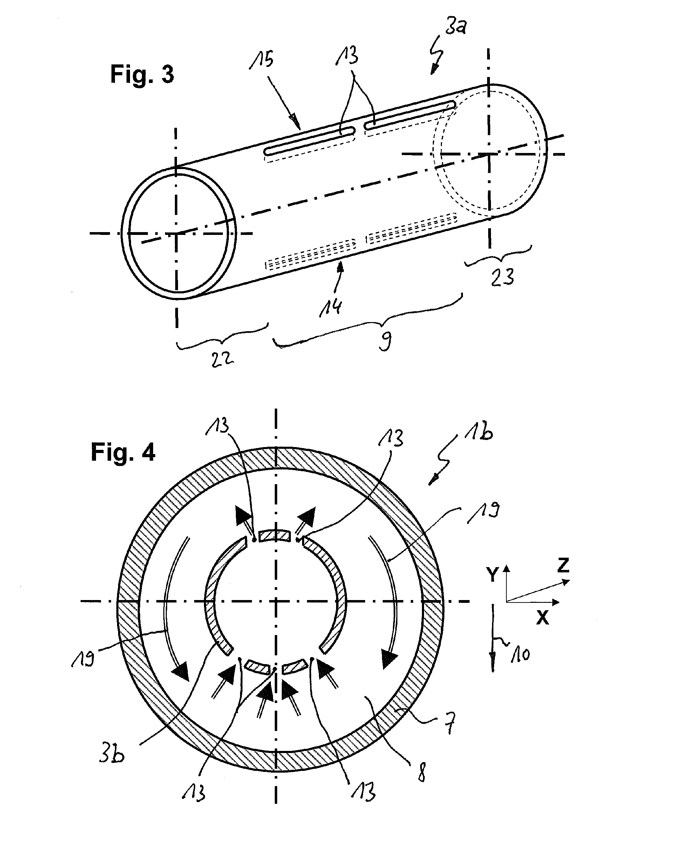

Zusammen mit der Figur 2 und Figur 3 geht aus der Figur 1 hervor, dass der Stromleiter 3a mindestens einen Leiterabschnitt 9 umfasst, welcher sich in einer quer zur Wirkrichtung der Erdanziehungskraft 10 - also in Richtung X - erstreckenden Längsrichtung (Z) erstreckt. Der Längsabschnitt 9 weist zwei Kanäle 13 auf, die den Stromleiter 3a bezüglich der Längsrichtung (Z) von einem Eintrittsbereich 14 zu einem Austrittsbereich 15 führend quer vollständig durchdringen. Die dabei entstehenden Öffnungen 16a im Stromleiter 3a sind allesamt schlitzförmig ausgeführt. Dabei sind zumindest die Stromleiteraussenseitigen Kanten der Öffnungen 16a entgratet und bei Bedarf durch verrunden dielektrisch optimiert. Die Kanäle 13 beziehungsweise die Öffnungen 16a im Eintrittsbereich 14 und dem Austrittsbereich 15 sind dimensions- und formmässig derart ausgebildet und im Stromleiter angeordnet ist, dass sich im Nominalbetrieb des Schaltanlagensegments 1a selbsttätig eine durch die Kanäle 13 führende Konvektionsströmung 17a des Isoliergases 8 mit einer bezüglich der Wirkrichtung der Erdanziehungskraft 10 entgegengesetzten Richtungskomponente einstellt. Die Kanäle 13 beziehungsweise die Öffnungen 16a wurden beispielsweise durch Fräsen, Laserschneiden oder Sägen in den Stromleiter 3a eingefügt.

Zugunsten der Klarheit wurde auf eine Schraffur des Gehäuses 7, der Anschlusskontakte 5 sowie der Stromschiene 3a verzichtet.

Obwohl in der Figur 2 aus Gründen der Übersichtlichkeit lediglich die Kanäle führende Konvektionsströmung 17a dargestellt ist, stellt sich insbesondere im Nominalbetrieb des Schaltanlagensegments 1a auch mantelaussenseitig eine weitere Konvektionsströmung mit einer bezüglich der Wirkrichtung der Erdanziehungskraft 10 entgegengesetzten Richtungskomponente ein, wobei auf Letztere an dieser Stelle nicht eingegangen werden soll. Aus der Figur 2 geht weiter hervor, dass die austrittsseitig aus dem Stromleiter 3a strömende Konvektionsströmung im Nominalbetrieb des Schaltanlagensegments 1a selbsttätig kühle Luft aus einem als Kaltgassee dargestellten Ansaugbereich 18 ansaugt, und eine vom Stromleiter 3a aufgenommene Wärmemenge anschliessend beim Zurückfliessen an das Gehäuse 7 abgibt. Diese Rückzirkulation ist mit Rückführgasströmen 19 angedeutet. Generell sind in Figur 1 und den nachfolgenden Figuren Gasströme 17, 19 als Doppelpfeile dargestellt.

Aus Figur 3 geht weiter hervor, dass der Grundprofilquerschnitt des Stromleiters 3a in Längsrichtung zwischen einem ersten Anschlussbereich 22 und einem zweiten Anschlussbereich 23 konstant ist.

Zugunsten einer kurzen Beschreibung wird bei der Beschreibung der weiteren Ausführungsformen hauptsächlich deren Unterschiede zu vorangegangenen Ausführungsformen eingegangen.

Im Unterschied zur ersten Ausführungsform des Stromleiters 3a von Figur 2 wird der Stromleiter 3b einer zweite Ausführungsform des Stromleiters 3b gemäss Figur 4 von in einer zur Schnittebene II-II analogen Schnittebene zwei nebeneinander angeordnete Kanäle 13 eingebracht. Um unnötige Wiederholungen zu vermeiden, wird auf die Beschreibung gleicher oder gleich wirkender Teile gegenüber der ersten Ausführungsform des Schaltanlagensegments 1a verzichtet. Die zwischen den beiden Kanälen gebildeten Schalenelemente sind in Längsrichtung Z endseitig am Rand der Öffnungen 16a gehalten.

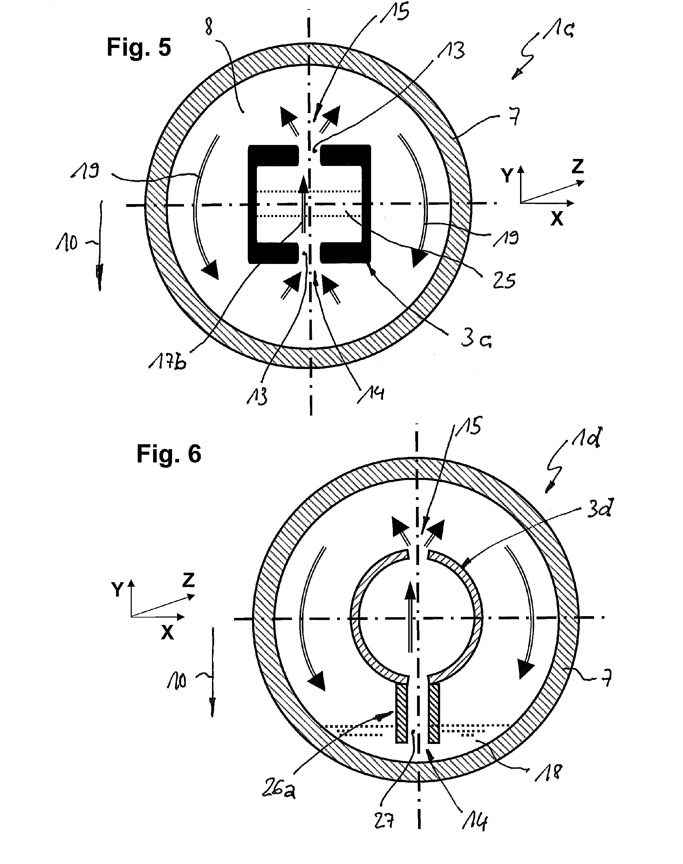

Wie aus Figur 5 hervorgeht, ist in einer dritten Ausführungsform eines Schaltanlagensegments 1c auch eine Ausführungsform eines Stromleiters 3c dargestellt, welche eine unkreisförmige, hier quadratische Mantelfläche aufweisen. Die durch den Kanal 13 entstandenen seitlichen Schalenelemente 24 beziehungsweise Halbschalenelemente können bei Bedarf mit einem oder mehreren Abstandhaltern 25 winkelstarr zueinander und aneinander befestigt werden. Ein solcher Abstandhalter ist in Figur 5 gepunktet dargestellt.

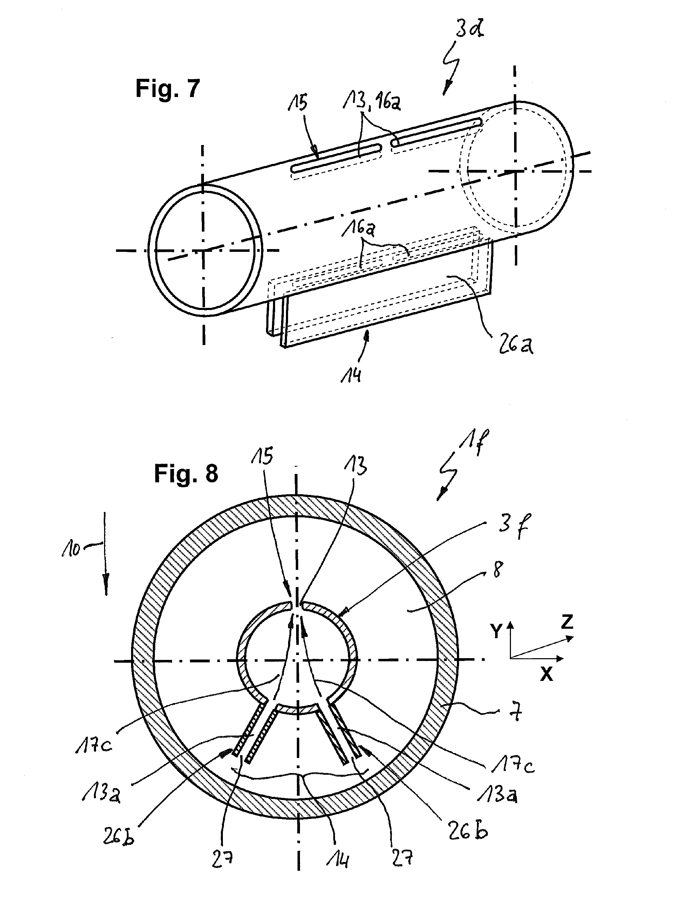

Der Stromleiter 3d der in Figur 6 und Figur 7 dargestellten, vierten Ausführungsform eines Schaltanlagensegments 1d unterscheidet sich zur ersten Ausführungsform des Stromleiters 3a durch einen eintrittsseitig angeordneten Ansaugstutzen 26a aus einem Isolationswerkstoff. Der Ansaugstutzen weist in Z-Richtung eine Länge auf, welche mehr als 50% eines Isolierabstandes zwischen dem Stromleiter 3d und dem Gehäuse 7 beträgt, so dass im Betrieb des Schaltanlagensegments 1d Isolationsgas aus einem Ansaugbereich 18 innerhalb des Gehäuses 7 ansaugbar ist, welcher Ansaugbereich 18 sich in Richtung der Erdanziehungskraft (20) gesehen näher beim Gehäuse 7 als beim Stromleiter 3d befindet. Wie aus Figur 7 hervorgeht ist der Ansaugstutzen 26a kielartig ausgebildet und erstreckt sich in Längsrichtung Z entlang aller Öffnungen 16a im Eintrittsbereich 14. Der Ansaugstutzen 26a ist in geeigneter Weise dauerhaft am Stromleiter 3d befestigt, beispielsweise mit einer Klemmverbindung.

Im Unterschied zur vierten Ausführungsform des Schaltanlagensegments 1d in Figur 6 weist die Stromschiene 3f der fünften Ausführungsform eines Schaltanlagensegments 1f in Figur 8 anstelle eines einzigen, kielartigen Ansaugstutzens 26a eine Vielzahl von in Z-Richtung hintereinander angeordneten, rohrartig ausgebildeten Ansaugstutzen 26b auf, von denen pro Reihe lediglich ein Stück in dessen Längsquerschnitt in Figur 8 dargestellt ist. Die Ansaugstutzen 26b umschliessen die eintrittsseitigen Öffnungen 13 beziehungsweise Kanalabschnitte 13a lateral. Im Unterschied zu vorangegangenen Ausführungsformen der Stromschiene ist bei dieser Stromschiene 3f die Anzahl Öffnungen im Querschnitt und im Eintrittsbereich 14 analog dem Schnitt II-II grösser als die Anzahl der Öffnungen 13 im Austrittsbereich. Um den Fluidwiderstand für die Konvektionsströmungen 17c möglichst gering zu halten, ist die austrittsseitige Öffnung bei Bedarf hinsichtlich ihrer Grösse und allenfalls ihrer Form entsprechend angepasst.

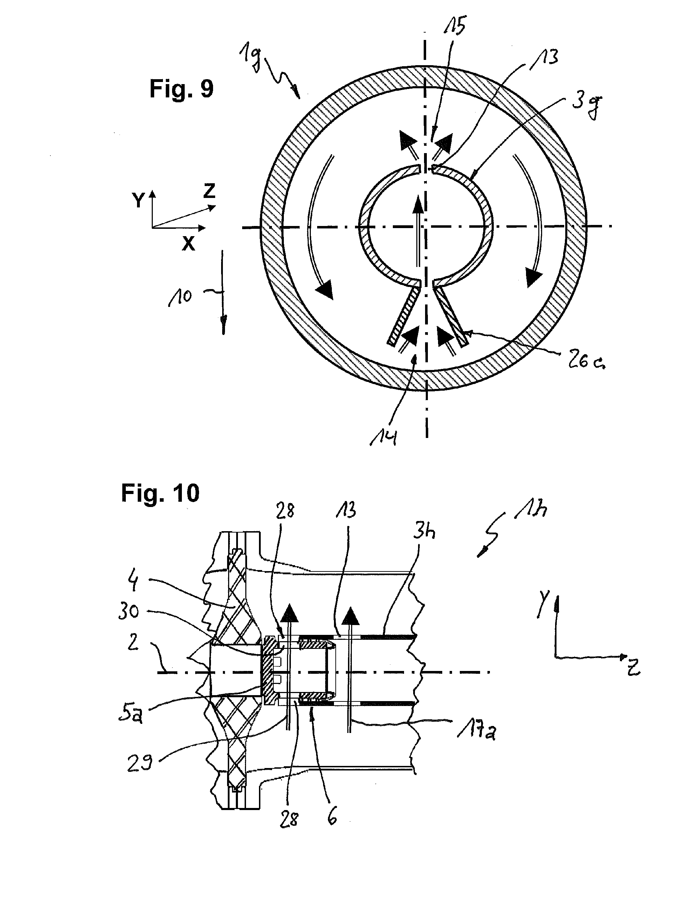

Im Unterschied zur fünften Ausführungsform des Schaltanlagensegments 1f in Figur 8 weist die Stromschiene 3g der sechsten Ausführungsform eines Schaltanlagensegments 1g in Figur 9 anstelle von zwei Reihen von Ansaugstutzen 26b lediglich eine reihe von Ansaugstutzen 26c auf, deren Achsen sich in Wirkrichtung der Erdanziehungskraft 10 erstrecken und in deren Durchmesser trichterförmig aufweiten, um einen strömungsgünstigen Ansaugquerschnitt für die Konvektionsströmung durch den Kanal 13 zu bilden.

Der in Figur 10 dargestellte Detailausschnitt der Zone A von Figur 1 zeigt ausschnittsweise eine siebte Ausführungsform eines Schaltanlagensegments 1 h. Im Unterschied zum ersten Anschlussbereich 22 der ersten Ausführungsform des Stromleiters 3a weist der Stromleiter 3h im Bereich zwischen den stirnseitigen Enden des Stromleiters 3a und der Kontaktelemente 6 zusätzlich weitere Öffnungen 28 auf. In Längsrichtung Z gesehen sind diese weiteren Öffnungen 28 beim maximalen Durchmesser des Stromleiters 3h angeordnet und dienen der zusätzlichen Abfuhr von Verlustwärme bei den Kontaktelementen 6 und/oder vom Kontaktträger 5a. Dazu weist der Kontaktträger 5a im Endbereich entsprechend den weiteren Öffnungen 28 weitere, durch den ersten Anschlussbereich 22 durch den Nominalleiter hindurchführenden Kanal bildende Gegenöffnungen 30, um die Gaszirkulation und damit die Wärmeabfuhr vom Stromleiter/ Nominalleiter mittels des weiteren Kühlgasstroms 29 zu ermöglichen. Wie aus Figur 10 hervorgeht, ermöglichen die weiteren Öffnungen 28 ein Zirkulieren von Isoliergas über weitere Kühlgasströme 29, welche je nach Ausgestaltung des Stromleiters 3h durch die Konvektionsströmung 17a begünstigt werden. Der in Figur 10 nicht gezeigte zweite Anschlussbereich ist entsprechend dem ersten Anschlussbereich 22a ausgebildet.

### BEZUGSZEICHENLISTE

- 1 a - 1 h: Schaltanlagensegment
- 2: Längsachse
- 3a - 3g: Stromleiter
- 4: Isolator, Festkörperisolator
- 5, 5a: Anschlusskontakt, Kontaktträger
- 6: Kontaktelemente
- 7: Gehäuse
- 8: Isoliergas, Isoliermittel
- 9: Leiterabschnitt
- 10: Wirkrichtung der Erdanziehungskraft
- 13, 13a: Kanal, Kanalabschnitt
- 14: Eintrittsbereich
- 15: Austrittsbereich
- 16, 16a: Öffnung
- 17a - 17c: Konvektionsströmung
- 18: Kaltgassee, Ansaugbereich
- 19: Rückführgasstrom
- 22: erster Anschlussbereich
- 23: zweiter Anschlussbereich
- 24: seitliches Schalenelement
- 25: Abstandhalter
- 26a - 26c: Ansaugstutzen
- 27: Eintrittsöffnung
- 28: weitere Öffnung
- 29: weiterer Kühlgasstrom
- 30: Gegenöffnung

## Patentansprüche

1. Hochspannungs-Schaltanlagensegment (1a, 1b, 1c, 1d, 1e, 1f, 1g, 1h) mit mindestens einer elektrischen Phase, wobei jede Phase einen Stromleiter (3a, 3b, 3c, 3d, 3e, 3f, 3g, 3h) aufweist, welcher mittels eines Isoliergases (8) in einem metallgekapselten Gehäuse (7) des Schaltanlagensegments elektrisch isoliert angeordnet ist, wobei der Stromleiter mindestens einen Leiterabschnitt (9) umfasst, welcher sich in einer quer zur Wirkrichtung der Erdanziehungskraft (10) erstreckenden Längsrichtung (Z) erstreckt, wobei der Stromleiter in Längsrichtung (Z) gesehen einen rohrförmigen Grundquerschnitt aufweist, **dadurch gekennzeichnet, dass** im mindestens einen Längsabschnitt (9) mindestens ein Kanal (13, 13a) angeordnet ist, welcher Kanal (13, 13a) den Stromleiter bezüglich der Längsrichtung (Z) von einem Eintrittsbereich (14) zu einem Austrittsbereich (15) führend quer durchdringt, und dadurch dass der mindestens eine Kanal (13, 13a) derart ausgebildet und im Stromleiter (3a, 3b, 3c, 3d, 3e, 3f, 3g, 3h) angeordnet ist, dass sich im Nominalbetrieb des Schaltanlagensegments selbsttätig eine durch den Kanal (13, 13a) führende Konvektionsströmung (17a, 17b, 17c) des Isoliergases (8) mit einer bezüglich der Wirkrichtung der Erdanziehungskraft (10) entgegengesetzten Richtungskomponente einstellt.

2. Schaltanlagensegment nach Anspruch 1, **dadurch gekennzeichnet, dass** der Grundprofilquerschnitt in Längsrichtung (Z) zwischen einem ersten Anschlussbereich (22, 22a, 22b) und einem zweiten Anschlussbereich (23) mehrheitlich konstant ist.

3. Schaltanlagensegment nach Anspruch 1 oder 2, **dadurch gekennzeichnet, dass** der Grundprofilquerschnitt kreisringförmig ist.

4. Schaltanlagensegment nach einem der Ansprüc h e 1 bis 3, **dadurch gekennzeichnet, dass** der Stromleiter (3a, 3b, 3c, 3d, 3e, 3f, 3g, 3h) im ersten Anschlussbereich (22, 22a, 22b) und im zweiten Anschlussbereich (23) einen kreisringförmigen Grundquerschnitt zum elektrischen Kontaktieren mit einem elektrischen Anschlusselement aufweist, bei Ausführungsformen insbesondere einen kreisringförmigen Leiterquerschnitt.

5. Schaltanlagensegment nach einem der Ansprüche 1 bis 4, **dadurch gekennzeichnet, dass** im Eintrittsbereich (14) und im Austrittsbereich (15) mindestens je eine Öffnung (16, 16a) in Form eines Loches oder eines sich in Längsrichtung (Z) erstreckenden Schlitzes angeordnet ist.

6. Schaltanlagensegment (1 d, 1 e, 1 f, 1 g) nach Anspruch 5, **dadurch gekennzeichnet, dass** die mindestens eine Öffnung (16, 16a) im Eintrittsbereich (14) als Ansaugstutzen (26a, 26b, 26c) ausgebildet ist, welcher sich in Wirkrichtung der Erdanziehungskraft (10) vom Stromleiter (3d, 3e, 3f, 3g) weg zum Gehäuse (7) hin erstreckt.

7. Schaltanlagensegment nach Anspruch 6, **dadurch gekennzeichnet, dass** der Ansaugstutzen (26a, 26b, 26c) ein elektrisch nichtleitendes Material umfasst oder aus einem elektrisch nichtleitenden Material besteht.

8. Schaltanlagensegment (1f) nach Anspruch 6 oder 7, **dadurch gekennzeichnet, dass** der Ansaugstutzen (26b) rohrartig ausgebildet ist, so dass er die Eintrittsöffnung (27) lateral umschliesst.

9. Schaltanlagensegment (1 d, 1 e, 1 f, 1 g) nach einem der Ansprüche 6 bis 8, **dadurch gekennzeichnet, dass** der mindestens eine Ansaugstutzen (26a, 26b, 26c) quer zur Längsrichtung (Z) gesehen eine Länge aufweist, welche Länge mehr als 50% eines Isolierabstandes zwischen dem Stromleiter (3d, 3e, 3f, 3g) und dem Gehäuse (7) beträgt, so dass im Betrieb des Schaltanlagensegments Isolationsgas (8) aus einem Ansaugbereich (18) innerhalb des Gehäuses (7) ansaugbar ist, welcher Ansaugbereich (18) sich in Richtung der Erdanziehungskraft (10) gesehen näher beim Gehäuse (7) als beim Stromleiter (3d, 3e, 3f, 3g) befindet.

10. Gasisolierte Schaltanlage mit mindestens einem als Schaltanlagensegment (1a, 1b, 1c, 1d, 1e, 1f, 1g, 1h) nach einem der Ansprüche 1 bis 9, wobei das Schaltanlagensegment eine Sammelschienenanordnung bildet, insbesondere eine einphasig gekapselte Sammelschienenanordnung.

11. Gasisolierte Schaltanlage nach Anspruch 10, **gekennzeichnet durch** einen Stromleiter (3a, 3b, 3c 3d, 3e, 3f, 3g, 3h) pro Phase, welcher Stromleiter über seine Innenfläche auf einen pinförmigen Anschlusskontakt (5, 5a) aufsteckbar und mit diesem elektrisch kontaktierbar ist.

12. Gasisolierte Schaltanlage nach Anspruch 11, **dadurch gekennzeichnet, dass** der Stromleiter (3a, 3b, 3c 3d, 3e, 3f, 3g, 3h) formschlüssig und/oder kraftschlüssig derart in einer vorbestimmten Relativposition in Umfangsrichtung gegenüber seinem Anschlusskontakt (5, 5a) fixierbar ist, dass der Eintrittsbereich (14) bezüglich der Wirkrichtung der Erdanziehungskraft (10) im Betrieb der gasisolierten Schaltanlage positionstreu haltbar bleibt.

13. Verfahren zur Kühlung mindestens eines Stromleiters (3a, 3b, 3c 3d, 3e, 3f, 3g, 3h) eines gasisolierten Hochspannungs-Schaltanlagensegments (1 a, 1b, 1 c, 1d, 1e, 1f, 1 g, 1 h) mit mindestens einer elektrischen Phase, umfassend die Schritte:
a) Bereitstellen eines Schaltanlagensegments (1a, 1b, 1c, 1d, 1e, 1f, 1g, 1h) mit einem Stromleiter (3a, 3b, 3c 3d, 3e, 3f, 3g, 3h) pro Phase, wobei der Stromleiter mittels eines Isoliergases (8) in einem metallgekapselten Gehäuse (7) des Schaltanlagensegments elektrisch isoliert angeordnet ist, und wobei der Stromleiter mindestens einen Leiterabschnitt (9) umfasst, welcher sich in einer quer zur Wirkrichtung der Erdanziehungskraft (10) erstreckenden Längsrichtung (Z) erstreckt, und wobei der Stromleiter in Längsrichtung (Z) gesehen einen rohrförmigen Grundquerschnitt aufweist, und wobei im mindestens einen Längsabschnitt (9) mindestens ein Kanal (13, 13a) angeordnet ist, welcher Kanal (13, 13a) den Stromleiter bezüglich der Längsrichtung (Z) von einem Eintrittsbereich (14) zu einem Austrittsbereich (15) führend quer durchdringt, wobei der mindestens eine Kanal (13, 13a) derart ausgebildet und im Stromleiter angeordnet ist, dass sich im Nominalbetrieb des Schaltanlagensegments bei einer Nennlast selbsttätig eine durch den Kanal (13, 13a) führende Konvektionsströmung (17a, 17b, 17c) des Isoliergases (8) mit einer bezüglich der Wirkrichtung der Erdanziehungskraft (10) entgegengesetzten Richtungskomponente einstellt;
b) Anlegen der Nennlast auf den Stromleiter (3a, 3b, 3c 3d, 3e, 3f, 3g, 3h);
c) Erwärmen des mindestens einen Stromleiters (3a, 3b, 3c 3d, 3e, 3f, 3g, 3h) aufgrund der durch die Nennlast hervorgerufenen ohmschen Verluste des Stromleiters (3a, 3b, 3c 3d, 3e, 3f, 3g, 3h);
d) Erzeugen einer selbsttätigen, auch durch den Kanal (13, 13a) hindurchführenden Konvektionsströmung (17a, 17b, 17c) zwischen dem Stromleiter und dem Gehäuse (7), derart dass zumindest ein Anteil der durch Erwärmen des Stromleiters entstandenen Wärmemenge vom Stromleiter auf das Gehäuse übertragen wird, wobei die Konvektionsströmung (17a, 17b, 17c) des Isoliergases (8) eine der Wirkrichtung der Erdanziehungskraft (10) entgegengesetzte Richtungskomponente aufweist.

14. Verfahren nach Anspruch 13 **gekennzeichnet durch** ein Verbessern der Wärmeabfuhr des mindestens einen Stromleiters (3d, 3e, 3f, 3g) **durch** Ansaugen von Isolationsgas (8) aus einem Ansaugbereich (18) innerhalb des Gehäuses (7), der sich in Richtung der Erdanziehungskraft (10) gesehen näher beim Gehäuse (7) als beim Stromleiter (3d, 3e, 3f, 3g) befindet.

15. Verfahren nach Anspruch 13 oder 14, **dadurch gekennzeichnet, dass** das mindestens eine Schaltanlagensegment ein Schaltanlagensegment (1 a, 1 b, 1 c, 1 d, 1 e, 1f, 1g, 1 h) gemäss einem der Ansprüche 1 bis 9 ist.
